## Europäisches Patentamt
(19) **European Patent Office**
**Office européen des brevets**

(11) Veröffentlichungsnummer : **0 178 632**
**B1**

(12) **EUROPÄISCHE PATENTSCHRIFT**

(45) Veröffentlichungstag der Patentschrift :
**11.01.89**

(21) Anmeldenummer : **85113069.0**

(22) Anmeldetag : **15.10.85**

(51) Int. Cl.⁴ : **B 62 D 33/06**, B 62 D 49/00,
B 62 D 1/18, B 60 K 35/00,
B 60 H 1/00

(54) Bedienungskonsole für den Fahrerstand eines Schleppers.

(30) Priorität : **16.10.84 DE 3437791**

(43) Veröffentlichungstag der Anmeldung :
**23.04.86 Patentblatt 86/17**

(45) Bekanntmachung des Hinweises auf die Patenterteilung : **11.01.89 Patentblatt 89/02**

(84) Benannte Vertragsstaaten :
**DE FR GB**

(56) Entgegenhaltungen :
**DE--A-- 2 430 546**
**DE--A-- 2 510 204**
**DE--A-- 2 831 753**
**DE--A-- 2 850 566**

(73) Patentinhaber : **Klöckner-Humboldt-Deutz Aktiengesellschaft**
**Deutz-Mülheimer-Strasse 111 Postfach 80 05 09**
**D-5000 Köln 80 (DE)**

(72) Erfinder : **Kreutz, Josef**
**Alte Wipperfürther Strasse 258**
**D-5060 Bergisch Gladbach 2 (DE)**

## Beschreibung

Die Erfindung bezieht sich auf eine Bedienungskonsole für den Fahrerstand eines Schleppers, die in Fahrtrichtung vor dem Fahrersitz als eine für sich geschlossene Einheit angeordnet und vorzugsweise mit ihrem Fußteil unabhängig von angrenzenden Bauteilen des Fahrerstandes bzw. einer Kabine lösbar am Fahrgestell oder dergl. des Schleppers befestigt ist, wobei alle Bedienungselemente für den Schlepper in einer vom Fahrerstand aus erreichbaren Position gelegen sind.

Es ist aus der US-A-3 656 799 ein Fahrerstand mit einer Bedienungskonsole genannter Art bekanntgeworden, die blockartig ausgebildet ist. Die Konsole befindet ich innerhalb einer den Fahrerstand schützenden Kabine vor deren Trennwand zum Motorraum. In der Konsole sind wichtige Bedienungselement wie die Lenkung, die Schaltung u. a. untergebracht. Dagegen fehlen in dieser Konsole solche Elemente, die die Belüftung, die Beheizung und die Klimatisierung betreffen. Diese Bauelemente müssen, soweit erforderlich, in aufwendiger Weise außerhalb der Konsole montiert werden und beanspruchen zusätzlichen Einbauraum. Außerdem ist durch die blockartige Ausbildung der Konsole deren Fußraum für den Fahrer sehr beengt, was insbesondere das Ein- und Aussteigen erschwert.

Der Erfindung liegt die Aufgabe zugrunde, eine Bedienungskonsole der eingangs umrissenen Art zu schaffen, die von ihrer Formgebung her geeignet ist, sowohl alle für den Betrieb eines Schleppers erforderlichen Bedienungseinheiten einschließlich der Belüftungs-, Heizungs- und Klimatisierungselemente aufzunehmen, als sich auch den Gegebenheiten hinsichtlich des vorhandenen Einbauraumes anpaßt und ferner einer ausreichenden Bewegungsfreiheit des Fahrers gerecht wird.

Die Aufgabe wird erfindungsgemäß gelöst durch die nachfolgenden Merkmale :

a) die Konsole ist in Seitenansicht etwa pilzförmig ausgebildet,

b) die Konsole ist in Querrichtung im wesentlichen mittig von einem umgekehrt U-förmigen vertikalen Bügel dichtend umgeben,

c) der eine sich vom Bügel aus erstreckende Teil der Konsole ragt in den Fahrerstand hinein und

d) der andere Teil der Konsole erstreckt sich durch die diese am U-förmigen Bügel mit einer U-förmigen Ausnehmung umgreifende vordere Kabinenwand in Fahrtrichtung nach vorn.

Durch die pilzförmige Ausbildung der Konsole können alle erforderlichen Bedienungseinheiten vom Fahrer bequem erreichbar angeordnet werden, und es ist sowohl bei der vorgesehenen Sitzposition des Fahrers als auch beim Ein- und Aussteigen genügend Bewegungsfreiheit gegeben. Außerdem ist bei dieser Ausbildung der Konsole die Möglichkeit gegeben, alle Elemente beispielsweise zur Wartung gut zugänglich anzuordnen. Der U-förmige Bügel erlaubt bei guter Abdichtung eine leicht trennbare Verbindung der vorderen Kabinenwand mit der Konsole. Der vom U-förmigen Bügel nach vorn gerichtete Teil der Konsole ragt in einen Bereich des Motorraumes, der üblicherweise nicht zur Unterbringung anderer Bauteile genutzt wird. Dieser Teil der Konsole nimmt die im anderen Teil nicht erforderlichen bzw. wegen Platzmangels nicht unterzubringenden Elemente auf, beispielsweise auch das geräuschbehaftete Gebläse.

In Weiterbildung der Erfindung weist der in den Fahrerstand hineinragende Teil der Konsole alle vom Fahrer zu bedienenden Elemente, insbesondere die Lenkung, alle Hebel, Pedale und Schalter sowie ferner die Ableseinstrumente und die Luftdüsen auf.

Hinsichtlich der Aufteilung der in der Konsole unterzubringenden Bauteile ist vorgesehen, daß im motorseitigen Teil der Konsole alle Elemente zur Belüftung, Beheizung und evtl. zur Klimatisierung der Kabine untergebracht sind.

Der U-förmige Bügel weist zur Ableitung von Regenwasser ein im Querschnitt U-förmiges Profil auf, an dessen hinterem Steg die vordere Kabinenwand dichtend anschließt.

Ferner ist es zur Schaffung eines arbeitsfreundlichen Fahrerstandes zweckdienlich, wenn das Fußteil der Konsole als eim mit geneigter Platte als Fußstütze versehenes Gehäuse ausgebildet ist.

Schließlich ist es unter den gegebenen Voraussetzungen vorteilhaft, wenn die Lenksäule in geneigter Lage durch den oberen Teil der Konsole und einen darunter befindlichen, zum Fahrersitz hin offenen Fußraum bis zu einer im Fußteil angeordneten Steuerpumpe der hydraulischen Lenkung verläuft.

Ein Ausführungsbeispiel der Erfindung wird im folgenden anhand der Zeichnung näher beschrieben. Es zeigt :

Fig. 1 teils in Seitenansicht, teils im Schnitt eine Bedienungskonsole gemäß der Erfindung,

Fig. 2 eine perspektivische Darstellung der Bedienungskonsole.

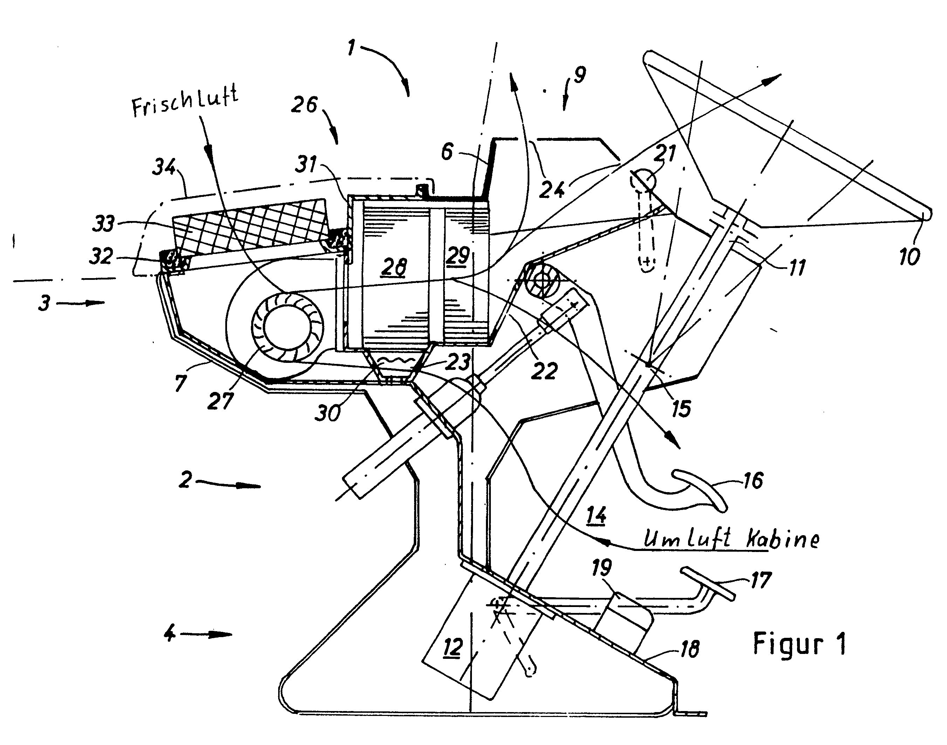

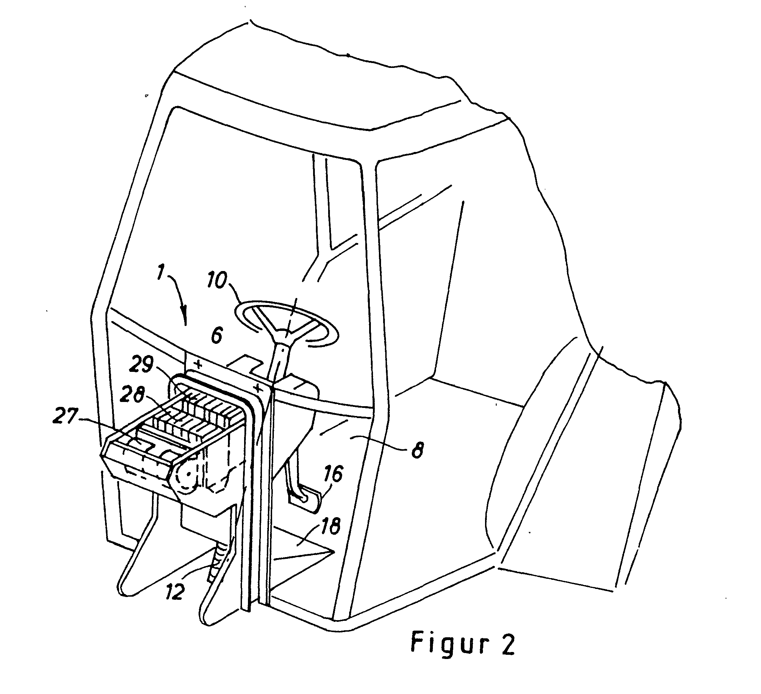

In Fig. 1 ist eine in Seitenansicht etwa pilzförmig ausgebildete Bedienungskonsole 1 für den Fahrerstand eines Fahrzeugs gezeigt, die über einem verhältnismäßig schmalen Mittelteil 2 ein in Längsrichtung des Fahrzeugs nach hinten und vorn auskragendes Oberteil 3 aufweist. Die Bedienungskonsole 1 ruht auf einem Fußteil 4, das in Seitenansicht eine etwa dreieckige Form hat. Wie aus Fig. 2 ersichtlich, sitzt an der Bedienungskonsole 1 ein diese etwa mittig umgreifender umgekehrt U-förmiger Bügel 6, der mit dem Gehäuse 7 der Bedienungskonsole 1 dichtend verbunden ist. Der Bügel 6 hat ein im Querschnitt U-förmiges Profil und dient als Wasserablaufrinne für die mit dem hinteren Steg des Bügels (6) dichtend verbundenen vorderen Kabinenwand, die hier mit 8 bezeichnet ist.

Der in Fahrtrichtung hinter dem U-förmigen Bügel 6 befindliche Teil 9 der Bedienungskonsole 1 ragt in den Fahrerstand hinein, so daß dieser Teil 9 vom Fahrersitz aus gut erreichbar ist. Außerdem ist dieser Teil (9) der Bedienungskonsole 1 so ausgebildet, daß der Fahrer eine bequeme Sitzposition einnehmen kann. Ein oberhalb des Oberteils 3 der Bedienungskonsole 1 befindliches Lenkrad 10 ist durch eine das Oberteil (3) der Bedienungskonsole 1 in geneigter Lage durchsetzende Lenksäule (11) mit einer im Fußteil 4 angeordneten Steuerpumpe 12 für die hydraulische Lenkung verbunden. Die Lenksäule 11 verläuft dabei unterhalb des Oberteils 3 der Konsole durch einen im Bereich des Mittelteils 2 gelegenen Fußraum 14, der zum Fahrersitz hin offen ist. Im Oberteil 3 der Bedienungskonsole 1 ist in der Lenksäule 11 ein Gelenk 15 mit einem Feststeller angeordnet, wodurch die Neigung des Lenkrades 10 einstellbar ist. Im Bereich des Fußraumes 14 sind Pedale 16 und 17 für die Betätigung der Bremse, der Kupplung und des Reglers für die Kraftstoffzuführung vorgesehen. Auf einer als Fußstütze dienenden Platte 18 des Fußteils 4 sitzt ein Schalter 19 zur Betätigung einer elektrischen Differentialsperre. An einem Handhebel 21 am Oberteil 3 nahe dem Lenkrad 10 kann die Heizung beispielsweise stufenlos eingestellt werden. Mehrere Luftschlitze 22 bis 24 dienen zur Zuführung von Frischluft bzw. Umluft und/oder für erwärmte Luft zur Heizung der Kabine.

Der in Fahrtrichtung vor dem U-förmigen Bügel 6 gelegene Teil 26 der Bedienungskonsole 1 hat in seinem Oberteil 3 ein Gebläse 27, das zweckdienlich als Axialgebläse ausgebildet ist. An das Gebläse 27 schließt sich ein Verdampfer 28 und ein Wärmetauscher 29 an. Der Verdampfer 28 hat im unteren Bereich eine Sammel- und Ablaufmulde 30 für Kondenswasser. Den oberen Abschluß des Verdampfers 28 bildet ein an den U-förmigen Bügel 6 anschließender Deckel 31, der vor dem Verdampfer 28 eine Öffnung mit einer Haltevorrichtung 32 für ein Luftfilter 33 aufweist. Der Teil 26 der Bedienungskonsole 1 ist oben durch einen Deckel 34 verschlossen, der zumindest im Bereich des Luftfilters 33 mit Öffnungen für den Lufteinlaß ausgestattet ist.

Die Bedienungskonsole 1 kann in ihrer Gesamtheit außerhalb der Kabine montiert werden, bevor sie beim Einbau mit dem Fahrgestell oder der Kabine verschraubt wird. Die Lüftungs-, Heizungs- und Klimaanlage ist so aufgebaut, daß diese mit nur einem Gebläse 27 ohne Schlauchverbindungen für die Luftführungen auskommt. Außerdem liegen bei dieser Bedienungskonsole alle Hydraulikleitungen sowie die Anschlüsse für die Heizungs- und Klimaanlage außerhalb der Kabine, so daß bei Undichtigkeiten an den genannten Leitungen Schäden innerhalb der Kabine vermieden werden.

## Patentansprüche

1. Bedienungskonsole für den Fahrerstand eines Schleppers, die in Fahrtrichtung vor dem Fahrersitz als eine für sich geschlossene Einheit angeordnet und vorzugsweise mit ihrem Fußteil unabhängig von angrenzenden Bauteilen des Fahrerstandes bzw. einer Kabine lösbar am Fahrgestell oder dergl. des Schleppers befestigt ist, wobei alle Bedienungselemente für den Schlepper in einer vom Fahrerstand aus erreichbaren Position gelegen sind, dadurch gekennzeichnet

a) daß die Konsole (1) in Seitenansicht etwa pilzförmig ausgebildet ist,

b) daß die Konsole (1) in Querrichtung im wesentlichen mittig von einem umgekehrt U-förmigen vertikalen Bügel (6) dichtend umgeben ist,

c) daß der eine sich vom Bügel (6) aus erstreckende Teil (9) der Konsole (1) in den Fahrerstand hineinragt und

d) daß der andere Teil (26) der Konsole (1) durch die diese am U-förmigen Bügel (6) mit einer U-förmigen Ausnehmung umgreifende vordere Kabinenwand (8) sich in Fahrtrichtung nach vorn erstreckt.

2. Bedienungskonsole nach Anspruch 1, dadurch gekennzeichnet, daß der in den Fahrerstand hineinragende Teil (9) der Konsole (1) alle vom Fahrer zu bedienenden Elemente, insbesondere die Lenkung (10, 11, 12), alle Hebel (21), Pedale (16, 17) und Schalter (19) sowie ferner die Ableseinstrumente und die Luftdüsen (22 bis 24) aufweist.

3. Bedienungskonsole nach den Ansprüchen 1 und 2, dadurch gekennzeichnet, daß im motorseitigen Teil (26) der Konsole (1) alle Elemente zur Belüftung (27), Beheizung (29) und evtl. zur Klimatisierung (28) der Kabine (8) untergebracht sind.

4. Bedienungskonsole nach einem der vorhergehenden Ansprüche, dadurch gekennzeichnet, daß der U-förmige Bügel (6) zur Ableitung von Regenwasser ein im Querschnitt U-förmiges Profil aufweist, an dessen hinterem Steg die vordere Kabinenwand (8) dichtend anschließt.

5. Bedienungskonsole nach einem der vorhergehenden Ansprüche, dadurch gekennzeichnet, daß das Fußteil (4) der Konsole (1) als ein mit geneigter Platte (18) als Fußstütze versehenes Gehäuse ausgebildet ist.

6. Bedienungskonsole nach einem der vorhergehenden Ansprüche, dadurch gekennzeichnet, daß die Lenksäule (11) in geneigter Lage durch den oberen Teil (3) der Konsole (1) und einen darunter befindlichen, zum Fahrersitz hin offenen Fußraum (14) bis zu einer im Fußteil (4) angeordneten Steuerpumpe (12) der hydraulischen Lenkung verläuft.

## Claims

1. A control console for the driving position of a tractor, which is arranged as a self-contained unit in front of the driving seat, in the driving direction, and preferably is secured with its foot part detachably on the chassis or the like of the tractor, independently of adjoining components of the driving position or a cabin, all the control elements for the tractor being placed in a position within reach of the driving position, characterised in that

a) the console (1) is made somewhat in mushroom form in lateral elevation,

b) the console (1) is surrounded in sealing manner in the transverse direction substantially centrally by a vertical arch piece (6) of inverted U-form,

c) in that the one part (9) of the console (1), extending out from the arch piece (9), extends into the driving position and

d) in that the other part (26) of the console (1) extends forward, in the driving direction, through the cabin wall (8) which grasps with a U-shaped aperture around the console at the U-shaped arch piece (6).

2. A control console according to Claim 1, characterised in that the part (9) of the console (1) extending into the driving position comprises all the elements to be operated by the driver, especially the steering (10, 11, 12), all levers (21), pedals (16, 17) and switches and also the indicator instruments and the air nozzles (22 to 24).

3. A control console according to Claims 1 and 2, characterised in that all the elements for ventilation (27), heating (29) and for air-conditioning (28), if provided, of the cabin (8) are accommodated in the part (26) of the console (1) on the engine side.

4. A control console according to any one of the preceding Claims, characterised in that the U-shaped arch piece (6) comprises, for draining off raid water, a section of U-shaped cross-section, the rear leg of which is sealingly adjoined by the front cabin wall (8).

5. A control console according to any one of the preceding Claims, characterised in that the foot part (4) of the console (1) is formed as a housing provided with an inclined plate (18) as foot rest.

6. A control console according to any one of the preceding Claims, characterised in that the steering column (11) extends in an inclined position through the upper part (3) of the console (1) and a foot space (14) situated therebeneath and open to the driving seat, as far as a control pump (12) of the hydraulic steering system, arranged in the foot part (4).

**Revendications**

1. Console de commande pour le poste de conduite d'un tracteur, qui est disposée dans le sens de la marche, devant le siège de conducteur, sous forme d'une unité fermée, et est de préférence fixée démontable sur le châssis ou similaire, du tracteur, avec sa partie de pied, indépendamment des parties constructives adjacentes du poste de conduite, ou d'une cabine, tous les éléments de commande du tracteur étant à cette occasion placés dans une position accessible depuis le poste de conduite, caractérisé en ce que :

a) la console (1) est réalisée approximativement en forme de champignon, vue de côté,

b) dans la direction transversale, principalement au milieu, la console (1) est entourée de manière étanche, par une traverse (6) verticale, en forme de U renversé,

c) une partie (9) de la console (1) qui s'étend en partant de la traverse (6) émerge dans le poste de conduite,

d) l'autre partie (26) de la console (1) s'étend vers l'avant, dans le sens de la marche, à travers cette traverse (6) en forme de U, avec une paroi avant de cabine (8) comprenant un évidement en forme de U.

2. Console de commande selon la revendication 1, caractérisée en ce que la partie (9) de la console (1) qui émerge dans le poste de conduite possède tous les éléments à manœuvrer par le conducteur, en particulier la direction (10, 11, 12) tous les leviers (21), pédales (16, 17) et interrupteurs (19), ainsi en outre que les instruments de lecture et les buses d'air (22 à 24).

3. Console de commande selon les revendications 1 et 2, caractérisée en ce que tous les éléments de l'aération (27), du chauffage (29) et, éventuellement, de la climatisation (28) de la cabine (8) sont logés dans la partie (26) de la console (1) qui est située du côté du moteur.

4. Console de commande selon l'une des revendications précédentes, caractérisée en ce que, pour dévier l'eau de pluie, la traverse (6) en forme de U possède un profil de section en forme de U, à la nervure arrière duquel la paroi (8) avant de cabine se raccorde de manière étanche.

5. Console de commande selon l'une des revendications précédentes, caractérisée en ce que la partie de pied (4) de la console (1) est réalisée sous forme d'un carter pourvu d'une plaque (18) inclinée, servant d'appui de pied.

6. Console de commande selon l'une des revendications précédentes, caractérisée en ce que la colonne de direction (11) se développe en position inclinée, à travers la partie supérieure (3) de la console (1) et qu'un espace de pied (4) se trouvant au-dessous, ouvert vers le siège de conducteur (14) se développe jusqu'à une pompe de commande (12) de la direction hydraulique qui est disposée dans l'espace de pied (4).

Frischluft

Umluft Kabine

Figur 1

Figur 2

2